# EUROPÄISCHE PATENTANMELDUNG

(11) **EP 0 987 185 A2**
(43) Veröffentlichungstag der Anmeldung: **22.03.2000**
(21) Anmeldenummer: 99116433.6
(22) Anmeldetag: 21.08.1999
(51) Int. Cl.: B65D 19/44

(54) **Transport- und Lagerelement für Aufnahmeelement unterschiedlicher Formen und Abmessungen**

(30) Priorität: 11.09.1998 DE 19841538
(71) Anmelder: Wolf Kunststoffe GmbH, 04229 Leipzig (DE)
(72) Erfinder: Wolf, Hans-Joachim, 75447 Sternenfels (DE)
(74) Vertreter: Frank, Gerhard, Dipl.-Phys.

(57) **Zusammenfassung**

Ein Transport- und Lagerelement mit einer Aufnahmeebene mit Vertiefungen zur Aufnahme von Aufnahmebehältern unterschiedlicher Formen oder Abmessungen weist Bohrungen oder Aussparungen in der Aufnahmeebene auf, in die Positionierungselemente derart einsteckbar sind, dass die jeweils aufzunehmenden Aufnahmeelemente in ihrer Lage auf dem Transport- und Lagerelement fixiert sind. Vorzugsweise sind die Positionierungselemente zylindrische Formkörper oder Stangen, als Handhabungselemente können insbesondere Radelemente oder ein Griffelement vorgesehen sein.

Damit ist es möglich, das Transport- und Lagerelement auf die jeweiligen Aufnahmeelemente optimal anzupassen und auszurüsten.

## Beschreibung

Die Erfindung betrifft ein Transport- und Lagerelement für Aufnahmeelemente unterschiedlicher Formen oder Abmessungen.

Aufnahmeelemente der zu transportierenden oder zu lagernden Art sind beispielsweise aus der DE 91 11 352 U1 für Blumentöpfe bekannt. Für Speisen und Getränke zeigt die DE 92 16 491 ein Aufnahmetablett für unverpackte Lebensmittel.

Ein gattungsgemäßes Transport- und Lagerelement für Container ist in Form eines Rollwagens aus dem Planungskatalog 1991 der Firma LATRA bekannt.

Insbesondere im kommerziellen Bereich (Großküchen, Krankenhäuser,usw.), wo viele Mahlzeiten zusammengestellt, bei einer bestimmten Temperatur gehalten und zu ihrem jeweiligen Verzehrort gebracht werden müssen, haben sich inzwischen eine Mehrzahl von standardisierten Aufnahmeelementen eingebürgert ("Euronorm" oder "Gastronorm"), die insbesondere gemeinsam transportiert werden sollen. Andere Aufnahmeelemente anderer Formen, wie z.B. für Suppen, oder insbesondere auch containerähnliche Aufnahmeelemente mit thermischer Isolierung, müssen ebenfalls diesen Weg von einer Eingangsstation (Einbringung der Speisen) bis zu einer Abgabestation durchlaufen.

Aufgabe der Erfindung ist es, für diese Vielzahl verschiedener Aufnahmeelemente in verschiedenen Formen, insbesondere auch verschiedener Tiefen, oder Abmessungen, das vorbekannte Transport- und Lagerelement so weiterzubilden, daß es einer möglichst großen Zahl verschiedener Typen solcher Aufnahmeelemente für beispielsweise Bleche, Behälter, Töpfe oder Container, eine sichere Positonierung in einem hierfür vorgesehenen Gestell/Schrank und/oder Fahrzeug schafft, d.h. insbesondere eine sichere Positionierung des jeweils untersten Aufnahmeelements bei mehreren übereinander gestapelten Aufnahmeelementen.

Erfindungsgemäß wird diese Aufgabe durch die Merkmale des Patentanspruchs 1 gelöst.

Das erfindungsgemäße plattenähnliche Transport- und Lagerelement stellt sozusagen einen "Formadapter" für den Übergang zwischen den Aufnahmebereichen, beispielsweise in Gestellen, Schränken oder Transportwagen zu den Stand- oder Aufnahmeflächen des jeweils zu lagernden oder transportierenden Aufnahmeelements dar. Die in der Aufnahmeebene des Transport- und Lagerelements eingebrachten Vertiefungen, Bohrungen oder Aussparungen sind so angeordnet, daß sie allein oder in Verbindung mit zusätzlichen Positionierungselementen insbesondere eine Halterung der eingangs angesprochenen genormten Aufnahmelemente gewährleisten. Durch Einbringung zusätzlicher Formungen oder Aussparungen ist eine praktisch beliebige Anpassung oder Ausweitung dieser Funktion möglich, insbesondere dann, wenn gemäß einer vorteilhaften Ausgestaltung des erfindungsgemäßen Transport- und Lagerlements dieses als einstückiges Spritzgußteil ausgebildet ist, in dem sich solche räumlichen Vorkehrungen in bekannter Weise einfach realisieren lassen.

Als einfache Positionierungselemente bieten sich zylindrische Formkörper als "Stöpsel" an, die abhängig von Abmessung und Typ des aufzunehmenden Aufnahmeelements in den zugeordneten Vertiefungen oder Bohrungen der Aufnahmeebene des Transport- und Lagerelements festgesetzt werden können, wo sie gerade solche Positionen einnehmen, daß ein zwischen ihnen eingelassenes Aufnahmeelement lagefixiert, d.h. in horizontaler Richtung nicht mehr verschiebbar gehalten wird.

Gemäß einer besonderen Ausgestaltung sieht die Erfindung vor, daß dem Transport- und Lagerelement auch Radelemente zugeordnet sein können, die in eine dieser Bohrungen von der Unterseite her festsetzbar sind, so daß das Transport- und Lagerelement als "Rolluntersatz" für eine Anzahl der jeweiligen Aufnahmebehälter dienen kann.

Weitere Ausgestaltungen sind weiteren Unteransprüchen entnehmbar.

Ein bevorzugtes Ausführungsbeispiel des erfindungsgemäßen Transport- und Lagerelements wird nun anhand von Zeichnungen näher erläutert. Es zeigen:
- Figur 1:: eine Aufsicht auf das Transport- und Lagerelement,
- Figur 2:: Schnitte in den Ebenen A-A bis E-E der Figur 1 und
- Figur 3A-C: schematische Skizzen verschiedener Anwendungsbereiche des Transport- und Lagerelements,
- Figur 4A,4B:: Unteransichten des Transport- und Lagerelements mit Radelementen und Griffelement.

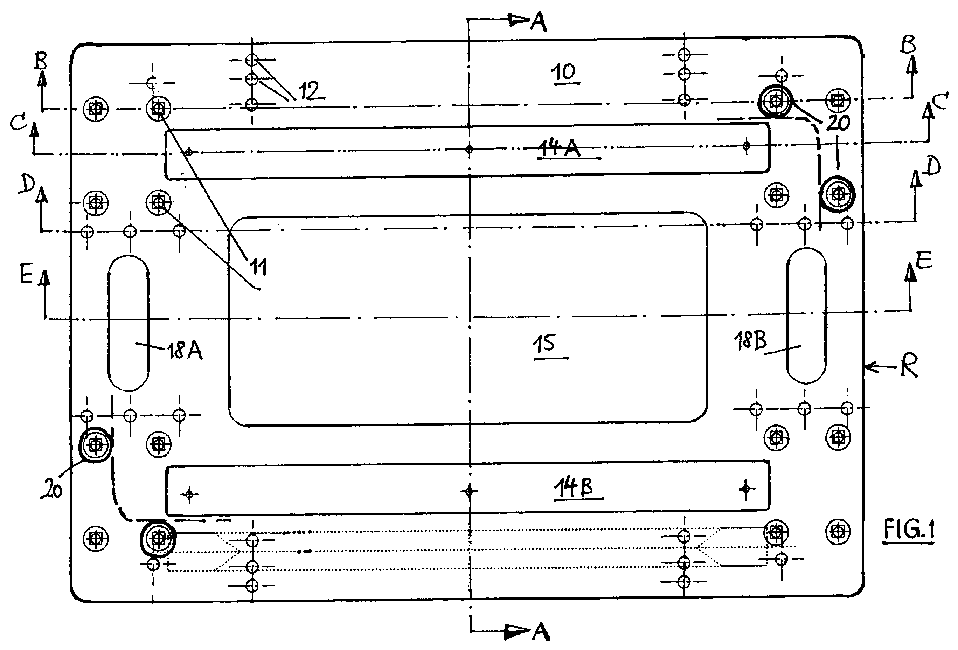

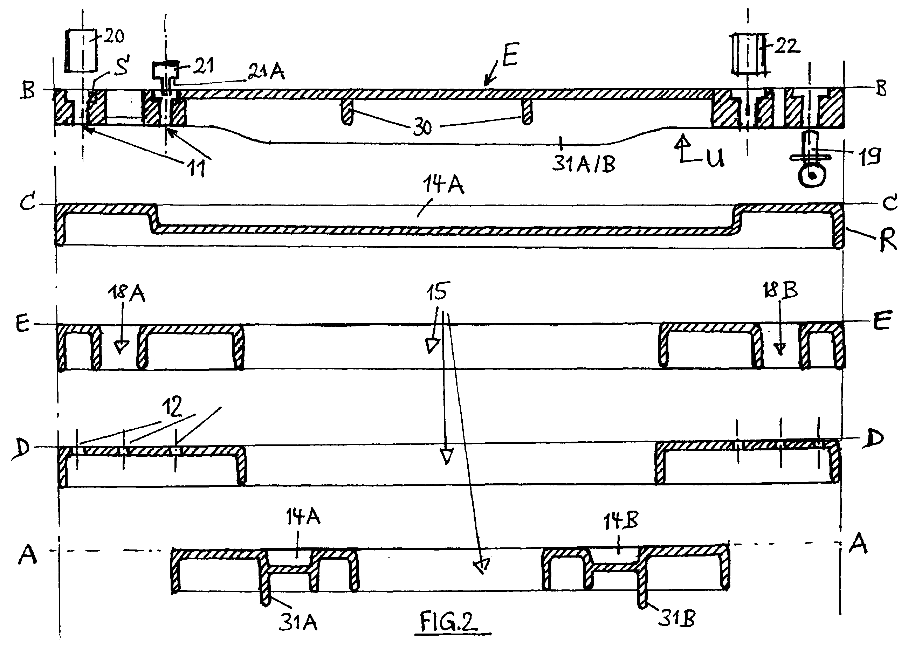

Die in den Figuren 1 und 2 dargestellte bevorzugte Ausführungsform des Transport- und Lagerelements besteht aus einem einstückigen Spritzgußteil aus einem thermoplastischen oder duroplastischen Kunststoff mit einer Wandstärke von vorzugsweise einigen Millimetern oder auch einem gepreßten oder gegossenen Metall. Zur Erzeugung der erforderlichen mechanischen Stabilität weist dieses Spritzgußteil einen umlaufenden Rand sowie in den beiden Hauptachsen eingezogene Stabilisierungsprofile 30 auf, so daß das Transport- und Lagerelement weitestgehend verwindungssteif ist und auch die erforderliche mechanische Tragfähigkeit für mehrere Behälter aufweist. Das Transport- und Lagerelement bildet somit einen tablettartigen Gegenstand mit rechteckiger Form, der mittels zwei eingeformter Grifföffnungen 18A,18B an den beiden gegenüberliegenden Schmalseiten leicht transportierbar ist.

Zur Gewichtsersparnis oder auch zur Aufnahme weiterer Elemente ist im zentralen Bereich des Transport- und Lagerelements eine rechteckige Aussparung vorgesehen, so daß sich die in Figur 1 erkennbare äußere Form des Transport- und Lagerelementes als rechteckiger Rahmen ergibt. Im wesentlichen in den Randbereichen dieses Rahmens sind nun Vertiefungen, Bohrungen und/oder Aussparungen angeformt, eingeformt oder durchbrochen, die im einzelnen kurz erläutert werden:

Im Eckbereich sind beim dargestellten Ausführungsbeispiel jeweils vier Bohrungen 11 vorgesehen, die einen stufenartigen Querschnitt haben, so daß eine Schulter S gebildet wird. Auf dieser Schulter können dann verschieden geformte Formkörper 20-23 aufsitzen, entweder mit ihrer unteren Stirnfläche oder mit einer korrespondierenden Schulter 21A wie beim Formkörper 21. Diese Formkörper ragen über die Ebene E des Transport- und Lagerelements hinaus und können so in das Transport- und Lagerelement eingestöpselt werden, daß sie ein begrenztes Aufnahmefeld für ein Aufnahmeelement zwischen sich einschließen, beispielsweise für ein Tablett, wie dies in Figur 1 mit gestrichelten Linien angedeutet sein soll. Hierbei würde es ausreichen, jeweils zwei diagonal gegenüberliegende Formkörper in das Transport- und Lagerelement einzusetzen, um die lagefixierte Positionierung eines solchen Tabletts zu gewährleisten.

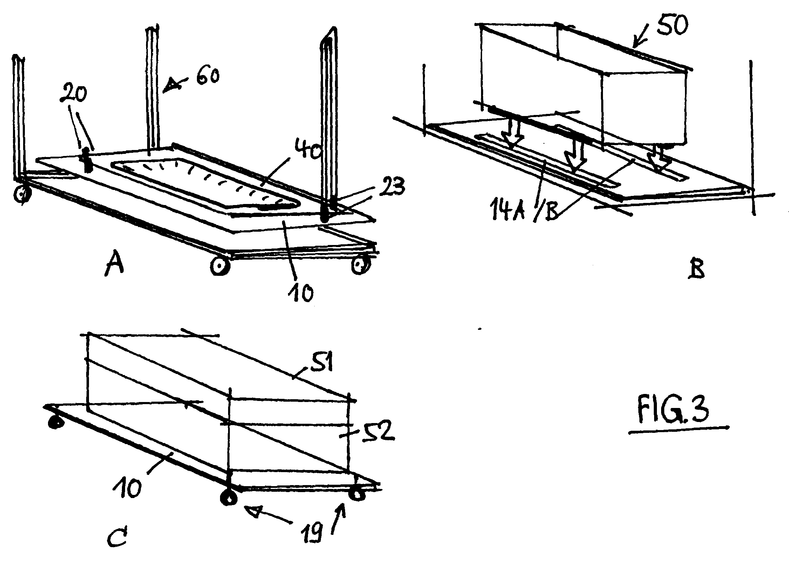

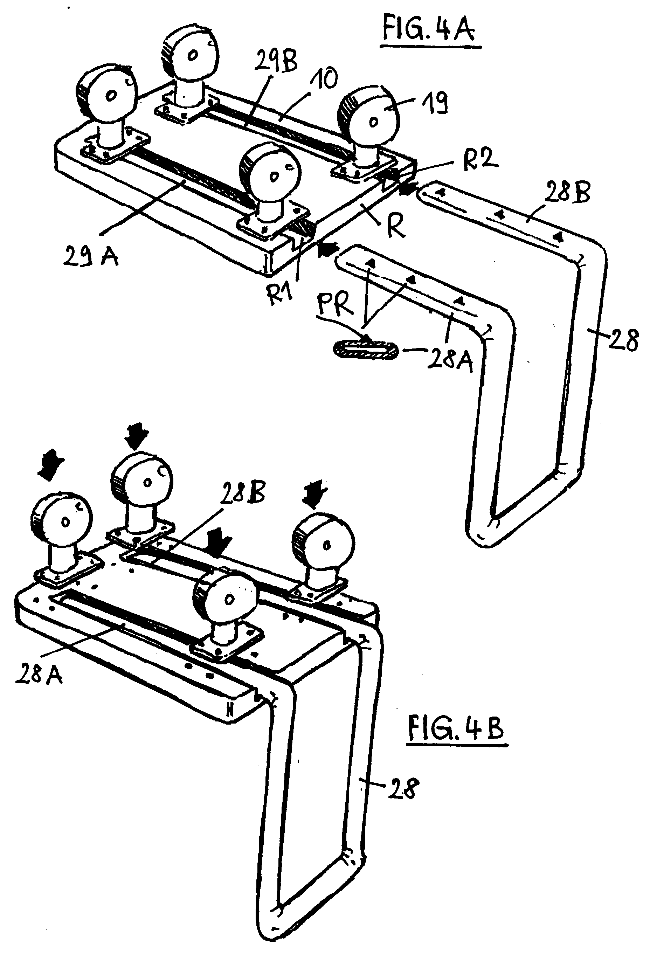

Solche Formkörper können auch als Stangen 23 ausgebildet sein, entweder einzeln (Figur 3A) oder zu einem U- Bügel verbunden (Figur 4A), wodurch sich die erstrebte Halte- und Positionierungswirkung über eine größere Höhe erstreckt.

Eine andere Funktion dieser Aussparungen oder anderer Bohrungen 12 kann darin bestehen, daß von der Unterseite her Radelemente 19 eingesteckt oder eingeschraubt sein können, um aus dem Transport- und Lagerelement einen rollbaren Untersatz für Aufnahmeelemente zu machen, der auf separate Transportfahrzeuge oder fahrbare Gestelle der üblichen Art nicht angewiesen ist.

Zur Aufnahme von Aufnahmeelementen, die oft auf ihrer Unterseite zwei parallel laufende Rippen als Standflächen haben, sind zwei ebenfalls parallel laufende Aufnahmerinnen 14A,14B vorgesehen.

Die Figur 3 zeigt einige Anwendungsbeispiele, die oben schon angedeutet worden sind:

Figur 3A zeigt ein Tablett 40 als Aufnahmeelement, das zwischen Formkörpern 20 in der in Figur 1 dargestellten Art und Weise in einem Transport- und Lagerelement ortsfest gehalten ist, das auf der Grundfläche eines Transportwagens 60 aufliegt. Auf dem Tablett 40 können dann üblicherweise gleichartige Tabletts gestapelt werden.

Figur 3B zeigt die Aufnahme eines Behälters 50 als Aufnahmeelement in den Aufnahmerinnen14A,14B eines Transport- und Lagerelements.

Figur 3C zeigt die Zuordnung von Radelementen zu einem Transport- und Lagerelement 10 zum Transport von zwei Aufnahmeelementen in Form von Behältern 51,52.

Figur 3D zeigt drei Transport- und Lagerelemente 10A,10B,10C, die ihrerseits übereinander gestapelt sein können, wenn die Rippen und Profilierungen auf ihrer Unterseite zweckmäßig ineinandergreifen und aufeinander abgestimmt sind, seitlich gehalten von den Stangen 23.

Eine weitere Ausgestaltung sieht vor, daß auf der Stirnseite des Transport- und Lagerelements Aussparungen R1,R2 im umlaufenden Rand R zum Einstecken eines Griffelements 28 in einen Führungskanal 29A,B vorgesehen sind, wie dies in Figur 4 dargestellt ist.

Das Griffelement kann hierbei aus einem Rundrohr gebogen sein, dessen parallele Enden 28A,28B flach gepreßt sind, um in ihren zugehörigen Führungskanal 29A,29B eingesteckt werden zu können. Hierbei sind in den Enden 28A,28B Profil-Rastelemente PR eingeformt, die mit (nicht dargestellten) komplementär geformten Rastelementen im Führungskanal zusammenwirken, so daß aufgeschraubten Radelementen 19 (Figur 4A) das Griffelement im Transport- und Lagerelement fixiert bleibt.

Alternativ hierzu (Figur 4B) können die Enden 28A,28B auch zusammen mit den Radelementen 19 verschraubt werden.

## Patentansprüche

1. Transport- und Lagerelement mit einer Aufnahmeebene mit Vertiefungen zur Aufnahme von Aufnahmebehältern unterschiedlicher Formen oder Abmessungen, gekennzeichnet durch Bohrungen (11,12) oder Aussparungen (29A,29B) in der Aufnahmeebene (E), in denen Positionierungselemente zur Lagefixierung der Aufnahmeelemente (40,50,51,52) und/oder von Handhabungselemente festsetzbar sind.

2. Transport- und Lagerelement nach Anspruch 1, dadurch gekennzeichnet, daß die Positionierungselemente zylindrische Formkörper oder Stangen (20...) sind, die auf einer in oder unterhalb der Aufnahmeebene (E) angeordneten Schulter (S) aufsitzen.

3. Transport- und Lagerelement nach Anspruch 2, dadurch gekennzeichnet, daß die Formkörper (21) eine Ringschulter (21A) aufweisen.

4. Transport- und Lagerelement nach Anspruch 1, dadurch gekennzeichnet, daß die Positionierungselemente mindestens zwei parallel zu seinen Längsseiten eingeformte Aufnahmerinnen (14A,14B) sind.

5. Transport- und Lagerelement nach Anspruch 1, dadurch gekennzeichnet, daß die Handhabungselemente Radelemente (19) an seiner Unterseite (U) sind.

6. Transport- und Lagerelement nach Anspruch 1, dadurch gekennzeichnet, daß die Aussparungen unterhalb der Ebene (E) verlaufende Führungskanäle (29A,B) zum Einstecken eines Griffelements (28) als Handhabungselement an mindestens einer Seite sind.

7. Transport- und Lagerelement nach Anspruch 1, dadurch gekennzeichnet, daß es ein einstückiges Spritzgußteil mit einer Wandstärke von einigen Millimetern ist.
